# EUROPÄISCHE PATENTSCHRIFT

(11) **EP 2 817 767 B1**
(45) Veröffentlichungstag und Bekanntmachung des Hinweises auf die Patenterteilung: **14.11.2018**
(21) Anmeldenummer: 13705921.8
(22) Anmeldetag: 21.02.2013
(51) Int. Cl.: G06K 19/077, B32B 38/06, B32B 37/12

(54) **ELEKTRONISCHES MODUL UND PORTABLER DATENTRÄGER MIT ELEKTRONISCHEM MODUL UND DEREN HERSTELLUNGSVERFAHREN**
ELECTRONIC MODULE AND PORTABLE DATA CARRIER COMPRISING SAID ELECTRONIC MODULE AND METHOD FOR PRODUCING THE SAME
MODULE ÉLECTRONIQUE ET SUPPORT DE DONNÉES PORTATIF ÉQUIPÉ DUDIT MODULE ÉLECTRONIQUE ET LEUR PROCÉDÉ DE PRODUCTION

(30) Priorität: 21.02.2012 DE 102012003605
(43) Veröffentlichungstag der Anmeldung: 31.12.2014
(73) Patentinhaber: Giesecke+Devrient Mobile Security GmbH, 81677 München (DE)
(72) Erfinder: BALDISCHWEILER, Michael, 81825 München (DE); MAYER, Karlheinz, 88167 Grünenbach (DE); RENNER, Thomas, 80802 München (DE); HUYNH, Thanh-Hao, 83052 Bruckmühl (DE)
(86) Internationale Anmeldenummer: PCT/EP2013/000508
(87) Internationale Veröffentlichungsnummer: WO 2013/124065

(56) Entgegenhaltungen:
- WO-A1-02/071329
- DE-A1-102004 006 457
- DE-A1-102005 058 101
- DE-T2- 69 904 306
- US-A1- 2011 020 606

## Beschreibung

Die vorliegende Erfindung betrifft einen portablen Datenträger mit einem in einen Datenträgerkörper des Datenträgers eingebetteten elektronischen Modul, ein entsprechendes Modul sowie jeweils Verfahren zum Herstellen eines solchen Datenträgers und eines solchen Moduls.

Portable, meist kartenförmige Datenträger, insbesondere Chipkarten, werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Um eine effiziente Herstellung der Chipkarte zu ermöglichen, wird der integrierte Schaltkreis bei einer Vielzahl von Herstellungsverfahren zunächst in ein Chipmodul verpackt und anschließend wird das Chipmodul in den Kartenkörper eingebaut. In der Regel wird das Chipmodul in eine Aussparung des Kartenkörpers eingeklebt.

Eine Kommunikation mit dem integrierten Schaltkreis kann über ein Kontaktfeld der Chipkarte abgewickelt werden, das hierzu von einer Kontaktiereinheit berührend kontaktiert wird. Das Kontaktfeld ist in der Regel Bestandteil des Chipmoduls. Alternativ oder zusätzlich zur Kommunikation über das Kontaktfeld kann eine kontaktlose Kommunikation vorgesehen sein. Hierzu kann der Kartenkörper eine Antenne aufweisen, die beim Einbau des Chipmoduls mit dem integrierten Schaltkreis elektrisch leitend verbunden wird. Abhängig vom Einsatzgebiet der Chipkarte kann der Kartenkörper außer der Antenne auch andere oder weitere elektrische Komponenten aufweisen, die beim Einbau des Chipmoduls mit dem integrierten Schaltkreis elektrisch leitend verbunden werden.

Bei der überwiegenden Zahl der für den Einbau eines Chipmoduls in einen Kartenkörper verwendeten Techniken sind die Bereiche, in denen die elektrisch leitenden Verbindungen zwischen dem integrierten Schaltkreis des Chipmoduls und der elektrischen Komponente des Kartenkörpers ausgebildet werden, nicht direkt mittels eines Werkzeugs zugänglich. Es sind daher Kontaktierungsverfahren erforderlich, die trotz dieser fehlenden Zugangsmöglichkeit eine Ausbildung einer elektrisch leitenden Verbindung zwischen dem integrierten Schaltkreis und der elektrischen Komponente ermöglichen.

Die elektrisch leitende Verbindung zwischen dem integrierten Schaltkreis und der elektrischen Komponente kann auf vielfältige Weise hergestellt werden, beispielsweise kraftschlüssig, stoffschlüssig oder mittels eines elektrisch leitfähigen Materials. Allerdings kann bisher kaum eines der bekannten Verfahren auf einfache Weise eine sichere, stabile und dauerhafte Kontaktierung der genannten Komponenten sicherstellen, insbesondere bei auf den Datenträgerkörper einwirkender mechanischer Belastung.

Aus der DE 10 2005 058101 A1 ist ein Verfahren zum Herstellen eines elektronischen Moduls mit einer Kontakteinrichtung bekannt. Dabei kann das Modul zumindest teilweise in einen Datenträgerkörper eines portablen Datenträgers eingebettet werden und kontaktiert eine elektrische Komponente des Datenträgers. Jedoch befindet sich eine elektrisch leitfähige Schicht auf der Außenseite des Chipmoduls und ist damit anfällig für Störungen.

Die WO 02/071329 A1 beschreibt ein Verfahren zur Herstellung eines Moduls zum Einbau in einen Datenträgerkörper. Um die Verbindung des Modulträgers mit dem Datenträgerkörper zu verbessern, wird die an den Datenträgerkörper angrenzende Schicht des Modulträgers derart gewählt, dass bei der gewählten Verbindungsmethode, wie z.B. dem Thermoschweissen, die Eigenschaften der angrenzenden Schicht eine gute Haftung erwarten lassen.

Zur Ausbildung eines dreidimensionalen Bildes auf einem Datenträger schlägt die US 2011/020606 A1 ein zweistufiges Verfahren vor. In einem ersten Schritt wird ein Halbzeug, enthaltend eine innenliegende deformierbare Schicht und eine darauf angeordnete Overlayschicht, einseitig mit einem strukturierten Laminierblech beaufschlagt, so dass das innenliegende Material verformt wird. Die Overlayschicht fließt anschließend in die entstehenden Lücken der deformierbaren Schicht.

Die DE 10 2004 006 457 A1 beschreibt das Fixieren von Chipmodulen auf einer zusätzlichen Haftfolienbahn, so dass die Chipmodule lagefixiert sind und die Haftfolie außerdem eine Schutzfolie für das Chipmodul bildet.

Die Anschluss eines Chipmoduls an Antennenkontakte wird in der EP 1 062 635 B1 dadurch gelöst, dass die Antennenkontakte während der Einbringung und der Kontaktierung des Chipmoduls einen viskosen Zustand aufweisen. Nach einer Erhärtung des Antennenmaterials liegt eine formschlüssige Verbindung zwischen Chipmodul und Antenne vor.

Aufgabe der vorliegenden Erfindung ist es, ein alternatives Verfahren zum Herstellen einer elektrisch leitenden Verbindung zwischen einer elektrischen Komponente eines Datenträgerkörpers und einem in den Datenträgerkörper eingebetteten Modul vorzuschlagen.

Diese Aufgabe wird durch ein Verfahren zum Herstellen eines elektronischen Moduls, ein Verfahren zum Herstellen eines portablen Datenträgers, ein elektronisches Modul sowie einen portablen Datenträger mit den Merkmalen der unabhängigen Ansprüche gelöst. Vorteilhafte Ausgestaltungen und Weiterbildungen sind in den abhängigen Ansprüchen angegeben.

Ein erfindungsgemäßes Verfahren zum Herstellen eines elektronischen Moduls mit einer Kontakteinrichtung derart, dass das Modul zumindest teilweise in einen Datenträgerkörper eines portablen Datenträgers eingebettet werden kann und dabei eine elektrische Komponente des portablen Datenträgers kontaktiert, umfasst die in Anspruch 1 angegebenen Schritte.

In der beschriebenen Weise kann ein elektronisches Modul auf einfache und kostengünstige Weise hergestellt und unter Beibehaltung konventioneller Fertigungstechniken in einen Datenträgerkörper eingebettet werden. Das Verformen der elektrisch leitfähigen Schicht kann ebenfalls mittels bekannter Verfahren, vorzugsweise mittels Tiefziehens, Hohlprägens oder verwandter Umformverfahren, kostengünstig und einfach erfolgen. Weiterhin bietet das erfindungsgemäße Verfahren die Möglichkeit, eine breite Variation räumlich strukturierter Profile bereitzustellen. Der eigentliche Fertigungsprozess des Moduls, welcher mit dem Aufbringen der elektrisch leitfähigen Schicht auf die Trägerschicht beginnt, ist im Wesentlichen unabhängig von der Art des Profils, da das Bilden des Profils vor dem Herstellen des Moduls erfolgt.

Die Profile in der elektrisch leitfähigen Schicht können, wie nachstehend im Detail beschrieben, in geeigneter Weise an die Art, in der das Modul beim Einbetten in den Datenträgerkörper mit einer elektrischen Komponente des Datenträgerkörpers elektrisch leitend verbunden werden soll, angepasst werden. Dabei kann eine direkte Kontaktierung der Kontakteinrichtung des Moduls mit einer elektrischen Komponente des Datenträgerkörpers vorgesehen sein. Alternativ kann eine solche elektrische Komponente über ein vorzugsweise elastisches, elektrisch leitfähiges Material mit der Kontakteinrichtung des Moduls elektrisch leitend verbunden werden.

Ein erfindungsgemäßes Verfahren zum Herstellen eines portablen Datenträgers mit einem Datenträgerkörper und einem elektronischen Modul umfasst neben dem Schritt des Herstellens des elektronischen Moduls in der vorstehend beschriebenen Weise einen Schritt des zumindest teilweisen Einbettens des Moduls in den Datenträgerkörper. Das Einbetten geschieht dabei derart, dass die Kontakteinrichtung des Moduls und eine elektrische Komponente des Datenträgerkörpers elektrisch leitend verbunden werden.

Ein erfindungsgemäßes elektronisches Modul zum zumindest teilweisen Einbetten in einen Datenträgerkörper eines portablen Datenträgers umfasst eine Kontakteinrichtung zum elektrisch leitenden Verbinden des Moduls mit einer elektrischen Komponente des portablen Datenträgers. Die Kontakteinrichtung umfasst dabei eine auf einer Trägerschicht des Moduls aufgebrachte, elektrisch leitfähige Schicht, welche ein räumlich strukturiertes Profil aufweist. Erfindungsgemäß ist das Profil zumindest teilweise durch Verformen der elektrisch leitfähigen Schicht, vorzugsweise mittels Tiefziehens oder Hohlprägens, vor dem Aufbringen der Schicht auf die Trägerschicht gebildet worden.

Ein erfindungsgemäßer portabler Datenträger schließlich umfasst einen Datenträgerkörper mit den Merkmalen des Anspruchs 11.

Damit zeigen die erfindungsgemäßen Verfahren und Vorrichtungen einen Weg auf, auf verschiedene Weise ausgestaltbare, verbesserte elektrisch leitende Verbindungen zwischen einer elektrischen Komponente eines Datenträgerkörpers und einem in den Datenträgerkörper eingebetteten Modul auf einfache und kostengünstige Weise herzustellen.

Als elektrisch leitfähige Schicht kann eine metallische Schicht, vorzugsweise eine Kupferfolie, bereitgestellt werden. Andere geeignete Materialien, welche sich in der vorstehend beschriebene Weise verformen lassen, sind gleichfalls einsetzbar.

Zum Aufbringen der zumindest einen elektrisch leitfähigen Schicht auf die Trägerschicht wird zwischen der Trägerschicht und der zumindest einen elektrisch leitfähigen Schicht in der Regel eine Haftvermittlerschicht angeordnet, vorzugsweise ein geeignetes Harz.

Das Aufbringen der elektrisch leitfähigen Schicht auf die Oberfläche der Trägerschicht wird derart durchgeführt, dass das räumlich strukturierte Profil in der elektrisch leitfähigen Schicht dabei erhalten bleibt. Anzumerken ist, dass die elektrisch leitfähige Schicht grundsätzlich die Eigenschaft besitzt, dass das Profil, welches im Schritt des Verformens der Schicht in diese eingebracht worden ist, nur durch externe Krafteinwirkung in seiner Form wesentlich veränderbar oder gar zerstörbar ist.

Vorzugsweise wird die elektrisch leitfähige Schicht auf die Trägerschicht auflaminiert. Dabei können in bekannter Weise Laminierbleche verwendet werden. Um ein Erhalten des Profils beim Laminieren zu gewährleisten, weist dasjenige Laminierblech, welches angrenzend an die bereits verformte elektrisch leitfähige Schicht angeordnet ist, im Bereich des räumlich strukturierten Profils entsprechende Aussparungen auf.

Eine gegebenenfalls eingesetzte Haftvermittlerschicht, welche, wie vorstehend beschrieben, zwischen der Trägerschicht und der zumindest einen elektrisch leitfähigen Schicht angeordnet ist, kann hinsichtlich ihrer Materialeigenschaften derart gewählt werden, dass sie während des Aufbringens, beispielsweise während des Laminierens, hinreichend fließfähig ist, um Hohlräume, welche sich zwischen der Trägerschicht und der elektrisch leitfähigen Schicht im Bereich von Hervorhebungen des Profils bilden, ausfüllt, und sich nach dem Aufbringen, beispielsweise durch Abkühlen, zumindest soweit verfestigt, dass das Profils in seiner räumlichen Ausformung dadurch gestützt wird. Dadurch kann einer nicht erwünschten, wesentlichen Verformung des Profils in der elektrisch leitfähigen Schicht beim Einbetten des Moduls in den Datenträgerkörper entgegengewirkt werden.

In weiteren Verfahrensschritten kann ein integrierter Schaltkreis auf der Trägerschicht angeordnet und mit der Kontakteinrichtung in bekannter Weise verbunden werden, beispielsweise mittels Bonddrähten. Bereits beim Aufbringen der zumindest einen elektrisch leitfähigen Schicht auf einer ersten Oberfläche der Trägerschicht kann - im gleichen Verfahrensschritt - auf der gegenüberliegenden Oberfläche der Trägerschicht ebenfalls eine in der Regel unverformte elektrisch leitfähige Schicht angeordnet und aufgebracht werden. Diese kann ebenfalls mit dem integrierten Schaltkreis verbunden werden und als Kontaktfeld für den herzustellenden Datenträger dienen, über welches dieser dann kontaktbehaftet mit einem entsprechenden Lesegerät kommunizieren kann.

Das räumlich strukturierte Profil in der elektrisch leitfähigen Schicht kann nach dem Aufbringen der Schicht auf die Trägerschicht nachbearbeitet und dadurch in der räumlichen Struktur verändert werden. Zum einen kann Material bereichsweise aus der elektrisch leitfähigen Schicht entfernt werden.

Dies dient dazu, dass die Kontakteinrichtung, wenn diese dazu vorgesehen ist, mit der elektrischen Komponente des Datenträgerkörpers nicht direkt, sondern über ein vorzugsweise elastisches, elektrisch leitfähiges Material elektrisch leitend verbunden zu werden, eine stabilere Verbindung mit dem elektrisch leitfähigen Material eingehen kann. Dadurch, dass das Einbetten des Moduls in den Datenträgerkörper in der Regel unter Druckbeaufschlagung erfolgt, wird die Kontakteinrichtung des Moduls auf das elektrisch leitfähige Material aufgepresst. Dabei fließt das Material zumindest teilweise in die Aussparungen ein, wodurch die Verbindung zwischen der Kontakteinrichtung und dem Material, welches danach entweder aushärtet oder in beschränkten Rahmen elastisch bleibt, im Vergleich zur Verbindung einer flach ausgebildeten Kontaktfläche mit dem Material verbessert wird.

Alternativ oder zusätzlich kann zum anderen zusätzliches, elektrisch leitfähiges Material, beispielsweise Kupfer, auf die elektrisch leitfähige Schicht aufgebracht werden. Dadurch kann die räumliche Struktur des Profils verändert und beispielsweise hinsichtlich der Eigenschaft verbessert werden, eine stabile Verbindung mit dem leitfähigen Material zu bilden, über welches die Kontakteinrichtung mit der elektrischen Komponente des Datenträgerkörpers verbunden wird.

Wie erwähnt, kann die Kontakteinrichtung des Moduls direkt oder indirekt - über ein elektrisch leitfähiges Material - mit der elektrischen Komponente des Datenträgerkörpers verbunden werden.

Im erstgenannten Fall wird das räumlich strukturierte Profil in der die Kontakteinrichtung des Moduls bildenden, elektrisch leitfähigen Schicht des Moduls somit derart ausgebildet, dass die Kontakteinrichtung und die elektrische Komponente des Datenträgerkörpers beim Einbetten des Moduls in den Datenträgerkörper dadurch elektrisch leitend verbunden werden, dass die Kontakteinrichtung die elektrische Komponente direkt kontaktiert.

Wenn die elektrische Komponente des Datenträgerkörpers beispielsweise zumindest teilweise in einer Aussparung des Datenträgerkörpers angeordnet ist, so kann das Profil in der Kontakteinrichtung des Moduls derart ausgebildet sein, dass es zumindest eine Hervorhebung aufweist, welche sich, wenn das Modul in den Datenträgerkörper eingebettet ist, derart in die Aussparung erstreckt, dass die Kontakteinrichtung die elektrische Komponente mittels der Hervorhebung direkt kontaktiert.

Ist hingegen eine elektrisch leitende Verbindung der elektrischen Komponente mit der Kontakteinrichtung des Moduls über ein elektrisch leitfähiges Material vorgesehen, so umfasst das Verfahren zur Herstellung des Datenträgers einen weiteren Schritt vor dem Einbetten des Moduls: Das elektrisch leitfähige Material wird in einer Aussparung des Datenträgerkörpers derart angeordnet, dass das Material einerseits mit der elektrischen Komponente des Datenträgerkörpers elektrisch leitend verbunden wird. Das Einbetten des Moduls in den Datenträgerkörper erfolgt dann andererseits derart, dass das Material die Kontakteinrichtung des Moduls und die elektrische Komponente des Datenträgerkörpers elektrisch leitend verbindet.

Dabei ist das Profil dann vorzugsweise derart ausgebildet, dass es zumindest eine Hervorhebung aufweist, welche sich in das elektrisch leitfähige Material erstreckt, wenn das Modul in den Datenträgerkörper eingebettet ist. Auf diese Weise kann, wie vorstehend beschrieben, die Verbindung zwischen der Kontakteinrichtung und dem elektrisch leitfähigen Material verbessert werden.

Ist das elektrisch leitfähige Material zusätzlich in gewissem Rahmen elastisch, kann dadurch die Stabilität der Verbindung zwischen der Kontakteinrichtung und dem Material weiter verbessert werden. Eine geringfügige Verlagerung des Moduls relativ zu dem Datenträgerkörper, beispielsweise als Folge einer Kraftausübung auf den Datenträgerkörper, z.B. durch Verbiegen, kann von dem Material aufgrund seiner Elastizität ausgeglichen werden, ohne dass die Verbindung zwischen dem Material und der Kontakteinrichtung abreißt. Dies gilt umso mehr, wenn das Profil in der Kontakteinrichtung in der vorstehend beschriebenen Weise beim Einbetten des Moduls mit dem Material zusammenwirkt, d.h. wenn das Material in Aussparungen der elektrisch leitfähigen Schicht eindringt und/ oder Hervorhebungen des Profils der elektrisch leitfähigen Schicht in das Material eindringen oder eingreifen.

Die Erfindung wird im Folgenden mit Bezug auf die beiliegenden Zeichnungen beispielhaft beschrieben. Darin zeigen:
- Figur 1: eine Draufsicht auf eine bevorzugte Ausführungsform eines erfindungsgemäßen Datenträgers;
- Figur 2: einen Ausschnitt eines Datenträgerkörpers des Datenträgers aus Fig. 1 in Draufsicht ohne eingebettetes elektronisches Modul;
- Figur 3A: den Ausschnitt des Datenträgerkörpers aus Fig. 2 in einer ersten Variante in Schnittansicht zusammen mit elastischem, elektrisch leitfähigem Material;
- Figur 3B: den Ausschnitt des Datenträgerkörpers aus Fig. 2 in einer zweiten Variante in Schnittansicht;
- Figur 4A: die elektrisch leitfähige Schicht in Seitenansicht vor dem Verformen;
- Figur 4B und 4C: die elektrisch leitfähige Schicht in Seitenansicht, jeweils nach dem Verformen gemäß einer ersten bzw. zweiten Variante;
- Figur 5A: einen Ausschnitt einer ersten bevorzugten Ausführungsform eines erfindungsgemäßen elektronischen Moduls in Schnittansicht;
- Figur 5B: einen Ausschnitt einer zweiten bevorzugten Ausführungsform eines erfindungsgemäßen elektronischen Moduls in Schnittansicht;
- Figur 6: eine Variante des Moduls aus Fig. 5A in Schnittansicht;
- Figur 7A: den Ausschnitt aus Fig. 3A mit eingebettetem Modul aus Fig. 6; und
- Figur 7B: den Ausschnitt aus Fig. 3B mit eingebettetem Modul aus Fig. 5B.

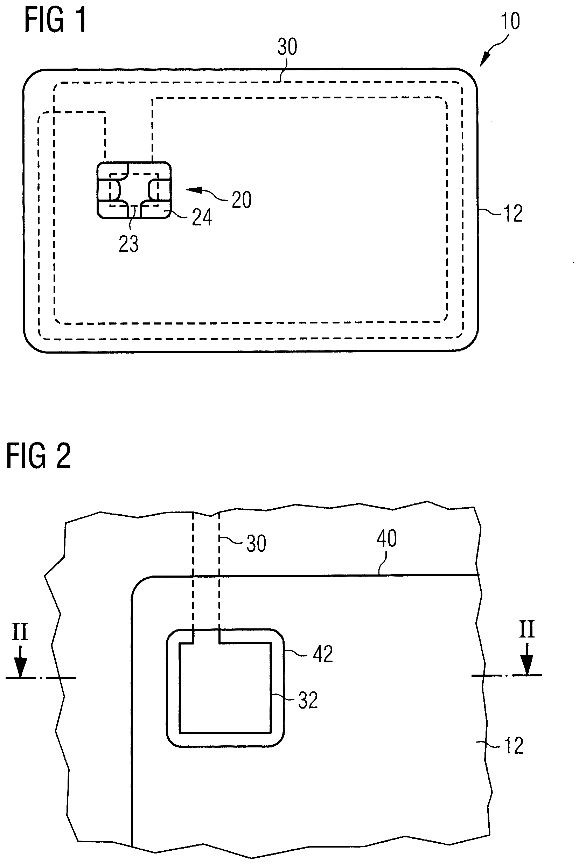

Figur 1 zeigt einen portablen Datenträger 10 in Form einer Chipkarte in einer schematischen Draufsicht. Der Datenträger 10 besitzt einen Datenträgerkörper 12, in den ein elektronisches Modul 20 in Form eines Chipmoduls eingebettet ist. Das Modul 20 umfasst einen integrierten Schaltkreis zum Speichern und/oder Verarbeiten von Daten (nicht gezeigt), welcher in einen Vergusskörper 23 vergossen ist. Weiterhin verfügt das Modul 20 über ein Kontaktfeld 24, das an der Außenseite des Datenträgerkörpers 12 angeordnet ist und den im Inneren des Datenträgerkörpers 12 angeordneten integrierten Schaltkreis überdeckt. Zwischen dem integrierten Schaltkreis und dem Kontaktfeld 24 sind mehrere (nicht gezeigte) elektrisch leitende Verbindungen ausgebildet, so dass dem integrierten Schaltkreis über das Kontaktfeld 24 elektrische Signale zugeführt werden können und der elektrische Schaltkreis über das Kontaktfeld 24 Signale aussenden kann. Hierzu kann das Kontaktfeld 24 mit einem (nicht gezeigten) Lesegerät verbunden werden.

Der Datenträgerkörper 12 weist in seinem Inneren eine elektrische Komponente 30 in Form einer Antennenspule auf. Diese kann beispielsweise als gedruckte oder geätzte Spule oder als Drahtspule ausgebildet sein. Die Antenne 30 ist elektrisch leitend mit dem integrierten Schaltkreis verbunden und ermöglicht analog zum Kontaktfeld eine Übertragung von Signalen, die von dem Schaltkreis empfangen und/ oder gesendet werden. Im Falle der Antenne 30 erfolgt eine entsprechende Datenübertragung kontaktlos. Dazu wird der Datenträger 10 in einem geeigneten Abstand zu einem (nicht gezeigten) Lesegerät angeordnet.

Alternativ oder zusätzlich zu der Antenne 30 können in dem Datenträgerkörper 12 des Datenträgers 10 aus Fig. 1 weitere (nicht dargestellte) elektrische Komponenten 30 angeordnet sein, beispielsweise eine Anzeige, ein Schalter, ein Sensor, eine Batterie und dergleichen. Auch diese elektrischen Komponenten können, wie nachfolgend detailliert beschrieben, mit dem integrierten Schaltkreis elektrisch leitend verbunden werden.

Fig. 2 zeigt den Datenträgerkörper 12 aus Fig. 1 vor dem Einsetzen des Moduls 20 ausschnittsweise in einer schematisierten Draufsicht. Der Datenträgerkörper 12 umfasst eine Aussparung 40, in die das Modul 20 zumindest teilweise eingebettet wird. Die Aussparung 40 ist mehrstufig ausgebildet und umfasst eine weitere Aussparung 42. Die Aussparung 42 ist im Vergleich zur Aussparung 40 tiefer ausgebildet. Am Boden der Aussparung 42 tritt eine Komponentenkontakteinrichtung 32 der elektrischen Komponente 30, welche ansonsten in dem Datenträgerkörper 12 unzugänglich eingebettet ist, hervor und ist dort direkt kontaktierbar. Die Komponentenkontakteinrichtung 32 ist einteilig mit der Komponente 30 ausgebildet. Es ist auch möglich, die Komponentenkontakteinrichtung 32 separat auszubilden und elektrisch leitend mit der Komponente 30 zu verbinden. Weiter kann es für bestimmte elektrische Komponenten möglich sein, dass diese direkt, ohne Bereitstellung einer separaten Komponentenkontakteinrichtung, elektrisch leitend mit einer entsprechenden Kontakteinrichtung des Moduls 20 verbunden werden können.

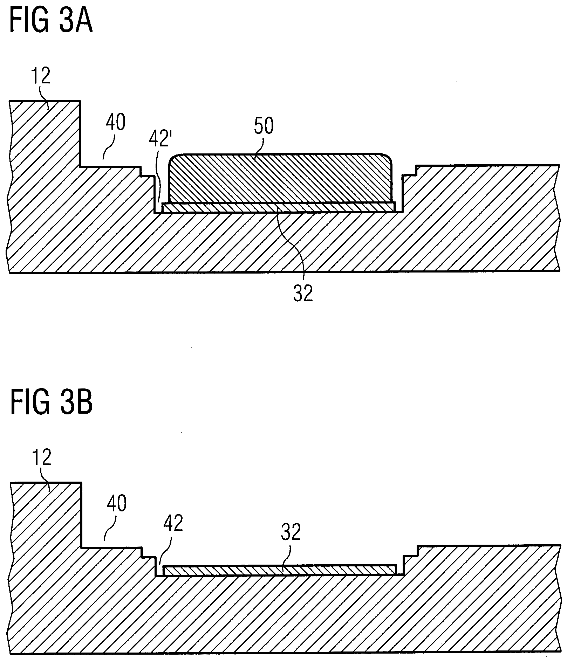

Fig. 3A zeigt den gleichen Ausschnitt einer ersten Variante des Datenträgerkörpers 12 in einer Schnittansicht entlang der Linie II-II aus Fig. 2, wobei in die Aussparung 42 zusätzlich eine Menge eines elastischen, elektrisch leitfähigen Materials 50 eingebracht worden ist, welches, wie nachfolgend detailliert beschrieben, zum elektrisch leitenden Verbinden des Moduls 20 mit der Komponente 30 dient.

Der Datenträgerkörper 12 kann mittels verschiedener Verfahren gebildet werden, beispielsweise im Spritzgussverfahren oder durch Laminieren verschiedener Folien. Die Aussparungen 40, 42 können dabei in den Folien bereits vorgesehen sein, beispielsweise ausgestanzt, oder aber aus dem Datenträgerkörper herausgefräst werden.

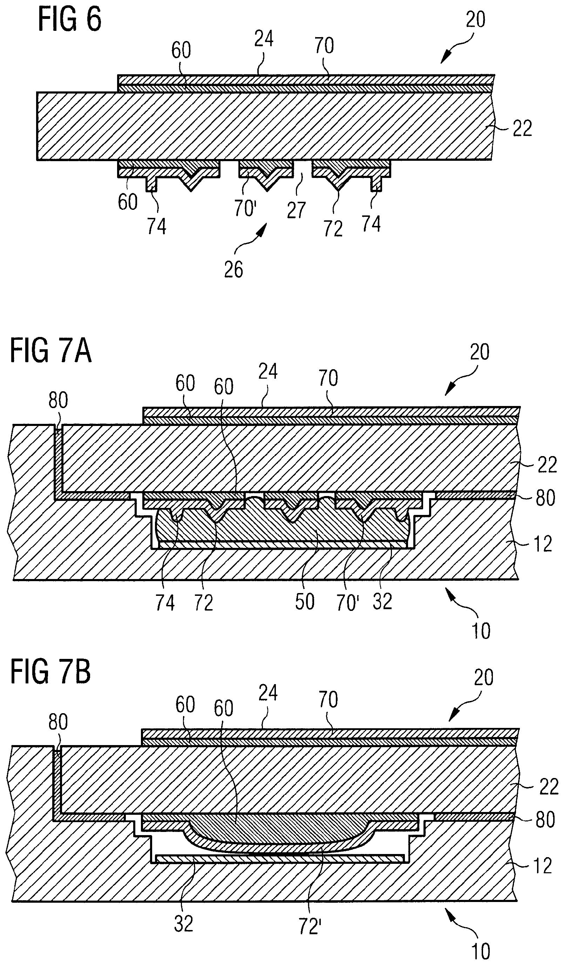

Fig. 3B zeigt ebenfalls den Ausschnitt aus Fig. 2 in einer Seitenansicht entlang der Linie II-II, allerdings mit Bezug auf eine zweite Variante des Datenträgerkörpers 12. Gemäß dieser Variante ist es vorgesehen, wie nachstehend mit Bezug auf Fig. 7B, beschrieben, dass die Komponentenkontakteinrichtung 32 und eine Kontakteinrichtung des Moduls 20 direkt elektrisch leitend miteinander verbunden werden, ohne Verwendung eines elastischen elektrisch leitfähigen Materials 50.

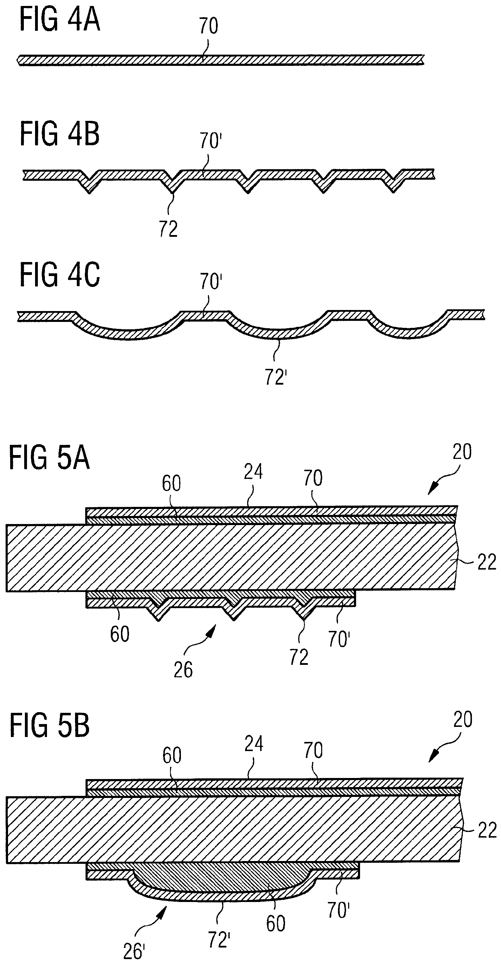

In Fig. 4A ist eine elektrisch leitfähige Schicht 70 in Form einer Kupferfolie in einer seitlichen Schnittansicht gezeigt, vor einem Verformen. Die Figuren 4B und 4C zeigen jeweils die Schicht 70' nach einem Verformen. In der Ausführungsform in Fig. 4B ist die Folie 70' mit einem Profil versehen worden, welches kleine, spitz zulaufende Hervorhebungen 72 aufweist. Anzahl, Höhe, Form solcher oder ähnlicher zum Bilden eines Profils gebildeter Hervorhebungen 72 oder Verformungen in der Schicht 70' können beliebig variiert werden. Je nach Anwendung kann beispielsweise die Höhe der Hervorhebungen 72 zwischen ca. 5µm und ca. 200µm variieren. Es können in einer Folie Hervorhebungen verschiedener Höhe und/oder verschiedener Form vorgesehen sein. Anstelle von spitz zulaufenden Hervorhebungen, welche in vorteilhafter Weise mit einem elastischen, elektrisch leitfähigen Material zusammenwirken, wie nachstehend mit Bezug auf Fig. 7A beschrieben, können auch eher flache, rundliche Hervorhebungen 72' (vgl. Fig. 4C) als Profil in der elektrisch leitfähigen Schicht 70' gebildet werden. Solche Profilstrukturen dienen vorzugsweise zur direkten Kontaktierung einer elektrischen Komponente 30 bzw. deren Komponentenkontakteinrichtung 32, wie nachstehend mit Bezug auf Fig. 7B beschrieben.

Beim Herstellen des Profils in der Folie 70 ist darauf zu achten, dass die ent-sprechenden Werkzeuge, wie z.B. Stempel, Walzen etc. geeignet dimensioniert sind, um die Folie 70 beim Verformen nicht zu beschädigen. Ein Verformen der Folie 70 zum Bilden des Profils 72, 72' kann beispielsweise mittels Tiefziehens, Hohlprägens oder anderer, geeigneter Umformungsverfahren erfolgen.

In Fig. 5A ist eine erste Ausführungsform eines elektronischen Moduls 20 ausschnittsweise in einer seitlichen Schnittansicht schematisch gezeigt. Auf den beiden Oberflächen einer Trägerschicht 22 ist jeweils eine elektrisch leitfähige Schicht 70, 70' in Form einer Kupferfolie aufgebracht. Andere, geeignete Materialien anstelle von Kupfer sind gleichfalls einsetzbar. Das Aufbringen dieser Schichten 70, 70' auf die Trägerschicht 22 kann beispielsweise mittels Laminierens erfolgen. Dabei kann eine Haftvermittlerschicht 60, beispielsweise ein Harz, jeweils zwischen der Trägerschicht 22 und einer elektrisch leitfähigen Schicht 70, 70' vorgesehen sein. Beim Aufbringen der Schichten 70, 70' auf die Trägerschicht 22 fließt das die Haftvermittlerschicht bildende Material in der Regel in die Hohlräume unter den Hervorhebungen 72, 72' und füllt diese aus. Ein geeignetes Harz beispielsweise, welches als Haftvermittler 60 dienen kann und welches beim Laminieren unter Einfluss von Wärme eher flüssig ist, erhärtet nach dem Laminieren, wenn es erkaltet, und stabilisiert so das Profil mit den Hervorhebungen 72, 72' zusätzlich, so dass einer Verformung oder gar Zerstörung des Profils durch äußere Krafteinwirkung entgegengewirkt werden kann.

Die Schicht 70' auf der Unterseite des Moduls 20 umfasst ein räumlich strukturiertes Profil aufgrund der Hervorhebungen 72, welches, wie vorsehend mit Bezug auf die Fig. 4A bis 4C beschrieben, vor dem Aufbringen der Schicht 70' auf die Trägerschicht hergestellt worden ist. Um das Profil beim Laminieren nicht zu beschädigen oder zu zerstören, können Laminierbleche eingesetzt werden, welche an den entsprechenden Stellen, d.h. z.B. im Bereich der Hervorhebungen 72, 72' (vgl. Fig. 5B), Aussparungen aufweisen. Bei der Verwendung alternativer Verfahren zum Aufbringen der Folien 70, 70' auf die Trägerschicht 22 ist in analoger Weise dafür Sorge zu tragen, dass das Profil 72, 72' in der Schicht 70' erhalten bleibt.

Die Schicht 70 auf der ersten Oberfläche der Trägerschicht 22, welche, wenn das Modul 20 in einen Datenträgerkörper 12 eingebettet ist, an der Oberfläche des Datenträgers 10 angeordnet ist (vgl. Fig. 7A, 7B), bildet das bereits erwähnte Kontaktfeld 24. Die räumlich strukturierte elektrisch leitfähige Schicht 70' auf der gegenüberliegenden Oberfläche bildet eine Kontakteinrichtung 26 des Moduls. Über diese Kontakteinrichtung 26 wird das Modul 20, wie nachstehend im Detail beschrieben, mit der elektrischen Komponente 30 des Datenträgerkörpers 12 elektrisch leitend verbunden. Im Folgenden wird die Kontakteinrichtung 26 meist als Modulkontakteinrichtung 26 bezeichnet, um diese begrifflich klar von der Komponentenkontakteinrichtung 32 der elektrischen Komponente 30 des Datenträgerkörpers 12 zu unterscheiden.

Das Kontaktfeld 24 und die Modulkontakteinrichtung 26 sind mit dem integrierten Schaltkreis des Moduls 20 elektrisch leitend verbunden, beispielsweise über (nicht gezeigte) Bonddrähte.

Das Modul 20 in Fig. 5B unterscheidet sich von dem Modul 20 in Fig. 5A lediglich hinsichtlich des Profils 72' in der elektrisch leitfähigen Schicht 70'.

Fig. 6 zeigt das Modul 20 aus Fig. 5A nach weiteren, zusätzlichen Verfahrensschritten. In einem ersten zusätzlichen Verfahrensschritt sind Aussparungen 27 in die elektrisch leitfähige Schicht 70' eingebracht worden. Dieser Schritt kann mittels bekannter Verfahren, beispielsweise mittels Ätzens, erfolgen. Die Aussparungen 27 können nahezu beliebige Formen aufweisen und einen mehr oder weniger großen Bereich der Schicht 70' betreffen. Ähnlich wie die Hervorhebungen 72 dienen die Aussparungen 27 in der Schicht 70' dazu, das räumlich strukturierte Profil in der Schicht 70' weiter zu variieren und hinsichtlich der Eignung, eine stabile und dauerhafte Verbindung mit einem vorzugsweise elastischen, elektrisch leitfähigen Material 50 auszubilden, zu verbessern.

Demselben Zweck dienen die weiteren Erhebungen 74, welche in einem zweiten, zusätzlichen Verfahrensschritt auf der Schicht 70' dadurch gebildet worden sind, dass zusätzliches Material, z.B. Kupfer, auf die Schicht 70' aufgebracht worden ist. Anzahl und Anordnung der Erhebungen 74 kann variieren. Solche zusätzlichen Erhebungen 74 können auch (nicht gezeigt) auf bereits vorhandene, während des Schritts des Verformens der Schicht 70 gebildete Hervorhebungen 72, 72' aufgesetzt werden und diese dadurch noch vergrößern bzw. in ihrer Form verändern. Die Erhebungen 74 können im Rahmen eines in der Regel bei der Herstellung des Moduls 20 ohnehin durchzuführenden Verfahrensschrittes - welcher für die vorliegende Erfindung ansonsten nicht relevant ist und in dem Durchkontaktierungen (nicht gezeigt) gebildet werden, welche die beiden Schichten 70, 70' verbinden - erzeugt werden, beispielsweise mit Hilfe einer entsprechenden Belichtungsmaske.

In Fig. 7A ist gezeigt, wie das Modul 20 aus Fig. 6 in die Aussparung 40 des Datenträgerkörpers 12 aus Fig. 3A eingebettet und mittels eines geeigneten Klebers 80, beispielsweise eines Heißklebers, darin verklebt worden ist. Dabei ist das elastische, elektrisch leitfähige Material 50 durch die räumlich strukturierte Modulkontakteinrichtung 26 geprägt worden. Das Material 50 dringt dabei einerseits in die Aussparungen 27 ein, andererseits erstrecken sich die Hervorhebungen 72 und die Erhebungen 74 in das Material 50, wenn das Modul 20 unter Druckbeaufschlagung in die Aussparung 40 des Datenträgerkörpers 12 eingebettet wird. Auf diese Weise verbindet sich die Modulkontakteinrichtung 26 stabil und zuverlässig mit dem Material 50. Der in dem Vergusskörper 23 (vgl. Fig. 1) vergossene integrierte Schaltkreis, welcher, wie erwähnt, mit der Modulkontakteinrichtung 26 elektrisch leitend verbunden ist, wird dadurch, über das elektrisch leitfähige Material 50 und die Komponentenkontakteinrichtung 32 mit der elektrischen Komponente 30, im gezeigten Beispiel der Antenne, elektrisch leitend verbunden.

Aufgrund der Elastizität des Materials 50, der Menge des in die Aussparung 42 eingebrachten Materials 50 sowie des Drucks durch die Kontaktfläche der Modulkontakteinrichtung 26 werden, wie erwähnt, Anteile des Materials 50 in die Aussparungen 27 der Modulkontakteinrichtung 26 eingepresst bzw. die Hervorhebungen 72 und Erhebungen 74 dringen in das Material ein. Das Material 50 ist so gewählt, dass die dadurch eingeprägte Struktur auch bei nachlassender Druckbeaufschlagung durch die Modulkontakteinrichtung 26 im Wesentlichen erhalten bleibt.

In Fig. 7B ist gezeigt, wie das Modul 20 aus Fig. 5B in die Aussparung 40 des Datenträgerkörpers 12 aus Fig. 3B eingebettet worden ist. Im Unterschied zum Datenträger 10 in Fig. 7A kontaktiert hier die Modulkontakteinrichtung 26' mittels der Hervorhebung 72' die Komponentenkontakteinrichtung 32 des Datenträgerkörpers 12 direkt, ohne Vermittlung durch ein dazwischen angeordnetes, elektrisch leitfähiges Material 50. Auch auf diese Weise kann bei geeigneter Wahl des Profils 72' und mittels geeigneter Druckbeaufschlagung beim Einbetten des Moduls 20 auf besonders einfache und kostengünstige Weise eine stabile elektrisch leitende Verbindung zwischen dem Modul 20 und der elektrischen Komponente 30 hergestellt werden. Das elektrisch leitfähige Material 50 sowie ein Verfahrensschritt zum Aufbringen desselben sind verzichtbar.

## Patentansprüche

1. Verfahren zum Herstellen eines elektronischen Moduls (20) mit einer Kontakteinrichtung (26; 26') derart, dass das Modul (20) zumindest teilweise in einen Datenträgerkörper (12) eines portablen Datenträgers (10) eingebettet werden kann und dabei eine elektrische Komponente (30) des portablen Datenträgers kontaktiert, umfassend den Schritt:
- Bereitstellen einer Trägerschicht (22) sowie zumindest einer elektrisch leitfähigen Schicht (70; 70');
und
**gekennzeichnet durch** die Schritte:
- Bilden eines räumlich strukturierten Profils (72; 72') in der elektrisch leitfähigen Schicht (70) **durch** Verformen der elektrisch leitfähigen Schicht (70);
- Bilden der Kontakteinrichtung (26; 26') **durch** Aufbringen der zumindest einen elektrisch leitfähigen Schicht (70; 70') auf die Trägerschicht (22),
- Anordnen eines integrierten Schaltkreises auf der Trägerschicht (22);
- Verbinden des integrierten Schaltkreises mit der Kontakteinrichtung (26; 26').

2. Verfahren nach Anspruch 1, **dadurch gekennzeichnet, dass** die elektrisch leitfähige Schicht (70; 70') zum Bilden des räumlich strukturierten Profils (72; 72') mittels Tiefziehens oder mittels Hohlprägens verformt wird.

3. Verfahren nach Anspruch 1 oder 2, **dadurch gekennzeichnet, dass** zum Aufbringen der zumindest einen elektrisch leitfähigen Schicht (70; 70') auf die Trägerschicht (22) zwischen der Trägerschicht (22) und der zumindest einen elektrisch leitfähigen Schicht (70; 70') eine Haftvermittlerschicht (60), vorzugsweise ein Harz, angeordnet wird.

4. Verfahren nach einem der Ansprüche 1 bis 3, **dadurch gekennzeichnet, dass** das Aufbringen der elektrisch leitfähigen Schicht (70; 70') auf die Trägerschicht (22) derart durchgeführt wird, dass das räumlich strukturierte Profil (72; 72') in der elektrisch leitfähigen Schicht (70; 70') dabei erhalten bleibt.

5. Verfahren nach Anspruch 4, **dadurch gekennzeichnet, dass** der Schritt des Aufbringens durch Laminieren unter Verwendung eines Laminierblechs durchgeführt wird, wobei das Laminierblech im Bereich des räumlich strukturierten Profils (72; 72') Aussparungen aufweist, um ein Erhalten des Profils (72; 72') beim Laminieren zu gewährleisten.

6. Verfahren nach einem der Ansprüche 1 bis 5, **dadurch gekennzeichnet, dass** als elektrisch leitfähige Schicht (70; 70') eine metallische Schicht, vorzugsweise eine Kupferfolie, bereitgestellt wird.

7. Verfahren nach einem der Ansprüche 1 bis 6, **dadurch gekennzeichnet, dass** das räumlich strukturierte Profil (72; 72') in der elektrisch leitfähigen Schicht (70; 70') nach dem Aufbringen der Schicht (70; 70') auf die Trägerschicht (22) nachbearbeitet wird, indem Material bereichsweise aus der elektrisch leitfähigen Schicht (70; 70') entfernt wird und/ oder zusätzliches, elektrisch leitfähiges Material auf die elektrisch leitfähige Schicht (70; 70') aufgebracht wird.

8. Verfahren zur Herstellung eines portablen Datenträgers (10) mit einem Datenträgerkörper (12) sowie einem elektronischen Modul (20), umfassend die Schritte:
- Herstellen des elektronischen Moduls (20) mit einem Verfahren nach einem der Ansprüche 1 bis 7;
- zumindest teilweises Einbetten des Moduls (20) in den Datenträgerkörper (12) derart, dass die Kontakteinrichtung (26; 26') des Moduls (20) und eine elektrische Komponente (30) des Datenträgerkörpers (12) elektrisch leitend verbunden werden.

9. Verfahren nach Anspruch 8, **dadurch gekennzeichnet, dass** das räumlich strukturierte Profil (72') in der die Kontakteinrichtung (26') des Moduls (20) bildenden, elektrisch leitfähigen Schicht (70; 70') des Moduls (20) derart ausgebildet wird, dass die Kontakteinrichtung (26') und die elektrische Komponente (30, 32) des Datenträgerkörpers (12) beim Einbetten des Moduls (20) in den Datenträgerkörper (12) dadurch elektrisch leitend verbunden werden, dass die Kontakteinrichtung (26') die elektrische Komponente (30, 32) direkt kontaktiert.

10. Verfahren nach Anspruch 8, **gekennzeichnet durch** den weiteren Schritt vor dem Einbetten des Moduls (20):
- Anordnen eines vorzugsweise elastischen, elektrisch leitfähigen Materials (50) in einer Aussparung (42) des Datenträgerkörpers (12) derart, dass das Material (50) mit der elektrischen Komponente (30, 32) des Datenträgerkörpers (12) elektrisch leitend verbunden wird;
wobei das Modul (20) dann derart in den Datenträgerkörper (12) eingebettet wird, dass das Material (50) die Kontakteinrichtung (26') des Moduls (20) und die elektrische Komponente (30, 32) des Datenträgerkörpers (12) elektrisch leitend verbindet.

11. Elektronisches Modul (20) zum zumindest teilweisen Einbetten in einen Datenträgerkörper (12) eines portablen Datenträgers (10), umfassend eine Kontakteinrichtung (26; 26') zum elektrisch leitenden Verbinden des Moduls (20) mit einer elektrischen Komponente (30, 32) des portablen Datenträgers (10),
**dadurch gekennzeichnet,**
**dass** die Kontakteinrichtung (26; 26') eine auf einer Trägerschicht (22) des Moduls (20) aufgebrachte, elektrisch leitfähige Schicht (70; 70') umfasst, die ein räumlich strukturiertes Profil (72; 72') aufweist,
**dass** auf der Trägerschicht (22) ein integrierter Schaltkreis angeordnet und mit der Kontakteinrichtung (26; 26') verbunden ist, und
**dass** das Profil (72; 72') zumindest teilweise durch Verformen der elektrisch leitfähigen Schicht (70; 70'), vorzugsweise mittels Tiefziehens oder Hohlprägens gebildet worden ist.

12. Portabler Datenträger (10), umfassend einen Datenträgerkörper (12) mit einer elektrischen Komponente (30, 32) sowie ein elektronisches Modul (20) gemäß Anspruch 11, welches zumindest teilweise in den Datenträgerkörper (12) eingebettet ist und über die Kontakteinrichtung (26; 26') des Moduls (20) elektrisch leitend mit der elektrischen Komponente (30, 32) des Datenträgers (10) verbunden ist.

13. Datenträger (10) nach Anspruch 12, **dadurch gekennzeichnet, dass**, wenn die Kontakteinrichtung (26) des Moduls (20) eingerichtet ist, indirekt über ein vorzugsweise elastisches, elektrisch leitfähiges Material (50) mit der elektrischen Komponente (30, 32) elektrisch leitend verbunden zu werden, das Profil (72) zumindest eine Hervorhebung aufweist, welche sich in das Material (50) erstreckt, wenn das Modul (20) in den Datenträgerkörper (12) eingebettet ist.

14. Datenträger (10) nach Anspruch 12, **dadurch gekennzeichnet, dass**, wenn die Kontakteinrichtung (26') des Moduls (20) eingerichtet ist, direkt mit der elektrischen Komponente (30, 32) elektrisch leitend verbunden zu werden, und die elektrische Komponente (30, 32) zumindest teilweise in einer Aussparung (42) des Datenträgerkörpers (12) angeordnet ist, das Profil (72') zumindest eine Hervorhebung (72') aufweist, welche sich, wenn das Modul (20) in den Datenträgerkörper (12) eingebettet ist, derart in die Aussparung (42) erstreckt, dass die Kontakteinrichtung (26') des Moduls (20) die elektrische Komponente (30, 32) mittels der Hervorhebung (72') direkt kontaktiert.

## Claims

1. A method for manufacturing an electronic module (20) having a contact device (26; 26') such that the module (20) can be embedded at least partly in a data carrier body (12) of a portable data carrier (10) and in doing so contacts an electric component (30) of the portable data carrier, comprising the step of:
- providing a carrier layer (22) as well as at least one electrically conductive layer (70; 70');
and **characterized by** the steps of:
- forming a spatially structured profile (72; 72') in the electrically conductive layer (70) by deforming the electrically conductive layer (70);
- forming the contact device (26; 26') by applying the at least one electrically conductive layer (70; 70') on the carrier layer (22);
- arranging an integrated circuit on the carrier layer (22);
- connecting the integrated circuit with the contact device (26; 26').

2. The method according to claim 1, **characterized in that** for forming the spatially structured profile (72; 72') the electrically conductive layer (70; 70') is deformed by means of deep drawing or by means of embossing.

3. The method according to claim 1 or 2, **characterized in that** for applying the at least one electrically conductive layer (70; 70') on the carrier layer (22) there is arranged an adhesion promoter layer (60), preferably a resin, between the carrier layer (22) and the at least one electrically conductive layer (70; 70').

4. The method according to any of claims 1 to 3, **characterized in that** the applying of the electrically conductive layer (70; 70') on the carrier layer (22) is carried out such that the spatially structured profile (72; 72') in the electrically conductive layer (70; 70') is retained.

5. The method according to claim 4, **characterized in that** the step of applying is carried out by laminating using a lamination plate, the lamination plate having recesses in the region of the spatially structured profile (72; 72') to guarantee a retaining of the profile (72; 72') upon laminating.

6. The method according to any of claims 1 to 5, **characterized in that** as an electrically conductive layer (70; 70') there is provided a metallic layer, preferably a copper foil.

7. The method according to any of claims 1 to 6, **characterized in that** the spatially structured profile (72; 72') in the electrically conductive layer (70; 70') is post-processed after the applying of the layer (70; 70') on the carrier layer (22) by material being removed in certain regions from the electrically conductive layer (70; 70') and/or additional electrically conductive material being applied on the electrically conductive layer (70; 70').

8. A method for manufacturing a portable data carrier (10) having a data carrier body (12) as well as an electronic module (20), comprising the steps of:
- manufacturing the electronic module (20) with a method according to any of claims 1 to 7;
- at least partially embedding the module (20) in the data carrier body (12) such that the contact device (26; 26 ') of the module (20) and an electric component (30) of the data carrier body (12) are connected electroconductively.

9. The method according to claim 8, **characterized in that** the spatially structured profile (72') in the electrically conductive layer (70; 70') of the module (20), which layer forms the contact device (26') of the module (20), is configured such that the contact device (26') and the electric component (30, 32) of the data carrier body (12), upon embedding the module (20) in the data carrier body (12), are electroconductively connected **in that** the contact device (26') directly contacts the electric component (30, 32).

10. The method according to claim 8, **characterized by** the further step, before the embedding of the module (20), of:
- arranging a preferably elastic, electrically conductive material (50) in a recess (42) of the data carrier body (12) such that the material (50) is electroconductively connected with the electric component (30, 32) of the data carrier body (12);
wherein the module (20) is then embedded in the data carrier body (12) such that the material (50) electroconductively connects the contact device (26') of the module (20) and the electric component (30, 32) of the data carrier body (12).

11. An electronic module (20) for at least partially embedding in a data carrier body (12) of a portable data carrier (10), comprising a contact device (26; 26') for electroconductively connecting the module (20) with an electric component (30, 32) of the portable data carrier (10),
**characterized in**
**that** the contact device (26; 26') comprises an electrically conductive layer (70; 70') applied on a carrier layer (22) of the module (20), which electrically conductive layer has a spatially structured profile (72; 72'),
**that** on the carrier layer (22) there is arranged an integrated circuit and connected with the contact device (26; 26'), and
**that** the profile (72; 72') has been formed at least partly by deforming the electrically conductive layer (70; 70'), preferably by means of deep drawing or embossing.

12. A portable data carrier (10) comprising a data carrier body (12) having an electric component (30, 32), as well as an electronic module (20) according to claim 11 which is embedded at least partly in the data carrier body (12) and is electroconductively connected with the electric component (30, 32) of the data carrier (10) via the contact device (26; 26') of the module (20).

13. The data carrier (10) according to claim 12, **characterized in that** when the contact device (26) of the module (20) is arranged to be connected electroconductively with the electric component (30, 32) indirectly via a preferably elastic, electrically conductive material (50), the profile (72) has at least one protrusion which extends into the material (50) when the module (20) is embedded in the data carrier body (12).

14. The data carrier (10) according to claim 12, **characterized in that** when the contact device (26') of the module (20) is arranged to be electroconductively connected directly with the electric component (30, 32), and the electric component (30,32) is arranged at least partly in a recess (42) of the data carrier body (12) the profile (72') has at least one protrusion (72') which, when the module (20) is embedded in the data carrier body (12), extends into the recess (42) such that the contact device (26') of the module (20) directly contacts the electric component (30, 32) by means of the protrusion (72').

## Revendications

1. Procédé de fabrication d'une module électronique (20) ayant un dispositif de contact (26; 26'), de telle façon que le module (20) peut être encastré au moins partiellement dans un corps de support de données (12) d'un support de données (10) portable et entre alors en contact avec un composant électrique (30) du support de données portable, comprenant l'étape :
- mise à disposition d'une couche support (22) ainsi que d'au moins une couche électroconductrice (70; 70') ;
et
**caractérisé par** les étapes :
- constitution d'un profil spatialement structuré (72; 72') dans la couche électroconductrice (70) par déformation de la couche électroconductrice (70) ;
- constitution du dispositif de contact (26; 26') par application de la au moins une couche électroconductrice (70; 70') sur la couche support (22)
- agencement d'un circuit intégré sur la couche support (22) ;
- liaison du circuit intégré au dispositif de contact (26; 26').

2. Procédé selon la revendication 1, **caractérisé en ce que** la couche électroconductrice (70; 70') est déformée par emboutissage ou par cambrage pour constituer le profil spatialement structuré (72; 72').

3. Procédé selon la revendication 1 ou 2, **caractérisé en ce que**, pour l'application de la au moins une couche électroconductrice (70; 70') sur la couche support (22), une couche d'agent adhésif (60), de préférence une résine, est agencée entre la couche support (22) et la au moins une couche électroconductrice (70; 70').

4. Procédé selon une des revendications de 1 à 3, **caractérisé en ce que** l'application de la couche électroconductrice (70; 70') sur la couche support (22) est effectuée de telle façon que le profil spatialement structuré (72; 72') dans la couche électroconductrice (70; 70') reste préservé.

5. Procédé selon la revendication 4, **caractérisé en ce que** l'étape de l'application est effectuée par laminage en utilisant une tôle de laminage, la tôle de laminage comportant des évidements dans la zone du profil spatialement structuré (72; 72') afin de garantir une préservation du profil (72; 72') lors du laminage.

6. Procédé selon une des revendications de 1 à 5, **caractérisé en ce que**, en tant que couche électroconductrice (70; 70'), c'est une couche métallique, de préférence une feuille de cuivre, qui est mise à disposition.

7. Procédé selon une des revendications de 1 à 6, **caractérisé en ce que** le profil spatialement structuré (72; 72') dans la couche électroconductrice (70; 70') est retravaillé après l'application de la couche (70; 70') sur la couche support (22), ce qui a lieu **en ce que** le matériau est, par zones, enlevé de la couche électroconductrice (70; 70') et/ou que du matériau supplémentaire électroconducteur est appliqué sur la couche électroconductrice (70; 70').

8. Procédé de fabrication d'un support de données (10) portable ayant un corps de support de données (12) ainsi qu'un module électronique (20), comprenant les étape :
- fabrication du module électronique (20) suivant un procédé selon une des revendications de 1 à 7 ;
- encastrement au moins partiel du module (20) dans le corps de support de données (12), de telle manière que le dispositif de contact (26; 26') du module (20) et un composant électrique (30) du corps de support de données (12) sont reliés de manière électriquement conductrice.

9. Procédé selon la revendication 8, **caractérisé en ce que** le profil spatialement structuré (72') est réalisé de telle façon dans la couche électroconductrice (70; 70') du module (20) constituant le dispositif de contact (26') du module (20) que le dispositif de contact (26') et le composant électrique (30, 32) du corps de support de données (12) sont, lors de l'encastrement du module (20) dans le corps de support de données (12), reliés de manière électriquement conductrice par le fait que le dispositif de contact (26') entre directement en contact avec le composant électrique (30, 32).

10. Procédé selon la revendication 8, **caractérisé par** l'autre étape avant l'encastrement du module (20) :
- agencement d'un matériau (50) électroconducteur de préférence élastique dans un évidement (42) du corps de support de données (12), de telle façon que le matériau (50) est relié de manière électriquement conductrice avec le composant électrique (30, 32) du corps de support de données (12) ;
cependant que le module (20) est alors encastré de telle façon dans le corps de support de données (12) que le matériau (50) relie de manière électriquement conductrice le dispositif de contact (26') du module (20) et le composant électrique (30, 32) du corps de support de données (12).

11. Module électronique (20) destiné à être encastré au moins partiellement dans un corps de support de données (12) d'un support de données (10) portable, comprenant un dispositif de contact (26; 26') destiné à la liaison électriquement conductrice du module (20) avec un composant électrique (30, 32) du support de données (10) portable,
**caractérisé en ce**
**que** le dispositif de contact (26; 26') comprend une couche électroconductrice (70; 70') qui est appliquée sur une couche support (22) du module (20) et qui comporte un profil spatialement structuré (72; 72'),
**que**, sur la couche support (22), un circuit intégré est agencé et relié au dispositif de contact (26; 26'), et
**que** le profil (72; 72') a été constitué au moins partiellement par déformation de la couche électroconductrice (70; 70'), de préférence par emboutissage ou par cambrage.

12. Support de données (10) portable comprenant un corps de support de données (12) doté d'un composant électrique (30, 32) ainsi que d'un module électronique (20) selon la revendication 11 qui est encastré au moins partiellement dans le corps de support de données (12) et est, par le biais du dispositif de contact (26; 26') du module (20), relié de manière électriquement conductrice avec le composant électrique (30, 32) du support de données (10).

13. Support de données (10) selon la revendication 12, **caractérisé en ce que**, quand le dispositif de contact (26) du module (20) est conçu pour être est relié de manière électriquement conductrice indirectement, par l'intermédiaire d'un matériau (50) électroconducteur de préférence élastique, avec le composant électrique (30, 32), le profil (72) comporte au moins une protubérance qui s'étend dans le matériau (50) quand le module (20) est encastré dans le corps de support de données (12).

14. Support de données (10) selon la revendication 12, **caractérisé en ce que**, quand le dispositif de contact (26') du module (20) est conçu pour être est relié de manière électriquement conductrice directement avec le composant électrique (30, 32), et que le composant électrique (30, 32) est agencé au moins partiellement dans un évidement (42) du corps de support de données (12), le profil (72') comporte au moins une protubérance (72') qui, quand le module (20) est encastré dans le corps de support de données (12), s'étend de telle façon dans l'évidement (42) que le dispositif de contact (26') du module (20) entre directement en contact avec le composant électrique (30, 32) au moyen de la protubérance (72').
